# EUROPEAN PATENT SPECIFICATION

(11) **EP 3 599 410 B1**
(45) Date of publication and mention of the grant of the patent: **11.01.2023**
(21) Application number: 19186584.9
(22) Date of filing: 16.07.2019
(51) Int. Cl.: F16M 11/22, F16M 13/02, F16M 11/16

(54) **WALL-MOUNTING ASSEMBLY**
WANDMONTAGEANORDNUNG
ENSEMBLE DE MONTAGE MURAL

(30) Priority: 23.07.2018 CN 201821181762 U
(43) Date of publication of application: 29.01.2020
(73) Proprietor: Sungrow (Shanghai) Co., Ltd., Shanghai 201203 (CN)
(72) Inventor: YU, Haiyang, Shanghai, 201203 (CN); ZENG, Bing, Shanghai, 201203 (CN); ZHI, Juntao, Shanghai, 201203 (CN)
(74) Representative: ABG Intellectual Property Law, S.L.

(56) References cited:
- US-A1- 2012 153 108
- US-B1- 9 182 078

## Description

### FIELD

The present application relates to the technical field of hanging racks, and in particular to a wall-mounting assembly.

### BACKGROUND

In order to reduce the occupied area of electrical equipment, more and more electrical equipment is mounted on the wall through wall-mounting assemblies. Specifically, a wall-mounting assembly includes a hanger mounted on a machine and a fastener mounted on the wall surface, the hanger is provided with a limiting hole for clamping the fastener, the hanger is a cantilever structure, and the limiting hole of the hanger is mounted on the fastener during assembling.

However, since the hanger is connected to the machine, the whole machine is supported at the position of the hanger and the limiting hole. When the machine is heavy, since the hanger is a cantilever structure, the hanger is easily deformed after the parts are mounted, resulting in low reliability of the wall-mounted assembly.

Therefore, a technical problem to be solved by those skilled in the art is to improve the reliability of the wall-mounting assembly.

US 2012/153108 A1 discloses a device for hanging an object onto a wall, including an object mount and a wall mount. The object mount has an elongated mounting strip, a rail strip in parallel with the mounting strip, a pair of opposite sides, and an angled strip extending from one side of the opposite sides to the other. The wall mount has a mounting plate and a pair of bracket portions. The mounting plate is configured to abut the wall and can be fastened to the wall via fasteners. The bracket portions are configured to receive the rail strip of the object mount. Center portion of the mounting plate extends well past the bracket portions to the bottom of the wall mount, so as to increase stability for the bracket portions.

### SUMMARY

An aspect of the present application is to provide a wall-mounting assembly, to improve the reliability of the wall-mounting assembly.

In order to achieve the above aspect, a wall-mounting assembly is provided according to the present application, including a hanger and a hanging plate, wherein
the hanger includes a mounting plate, a machine fixing plate, and a limiting plate; the machine fixing plate and the limiting plate are fixed at two opposite ends of the mounting plate respectively, and are located at an upper portion and a lower portion of the mounting plate, respectively; and
the hanging plate includes a hanging plate body and a supporting plate arranged at the hanging plate body, the supporting plate is configured for supporting the mounting plate, a limiting plate mounting clearance is provided by cooperation between the hanging plate body and the supporting plate, and the liming plate mounting clearance is configured for accommodating the limiting plate.

Preferably, the hanging plate body is a convex-shaped plate having a convex portion in the middle, the supporting plate is located above the convex portion of the hanging plate body, and each of two opposite ends of the supporting plate is provided with a supporting projection portion abutting against a top end of a side wall of a corresponding end of the convex portion.

Preferably, one side of the hanging plate body facing a machine is provided with a limiting projection capable of abutting against a back portion of the machine.

Preferably, the wall-mounting assembly further includes a levelness detection device for detecting whether the hanging plate is mounted horizontally.

Preferably, the levelness detection device is provided with a sealed chamber horizontally placed on the hanging plate body, there are a liquid and a detecting bubble floating on top of the liquid inside the sealed chamber, and each of two opposite ends of a middle portion of the sealed chamber is provided with a detecting control line.

Preferably, the wall-mounting assembly further includes a lock screw for locking the mounting plate and the supporting plate.

Preferably, each of two opposite sides of a bottom end of the limiting plate is provided with a guiding surface.

Preferably, the hanger further includes a reinforcing plate arranged above the mounting plate, and two ends of the reinforcing plate are connected to the machine fixing plate and the limiting plate, respectively.

Preferably, the hanger is integrally formed by extrusion.

Preferably, the hanging plate is formed by bending sheet metal.

In the above technical solution, the wall-mounting assembly according to the present application includes a hanger and a hanging plate, the hanger includes a mounting plate, a machine fixing plate and a limiting plate, the machine fixing plate and the limiting plate are fixed at the two opposite ends of the mounting plate respectively, and are located at an upper portion and a lower portion of the mounting plate, respectively; the hanging plate includes a hanging plate body and a supporting plate arranged at the hanging plate body, and the supporting plate is configured for supporting the mounting plate; a limiting plate mounting clearance is provided by cooperation between the hanging plate body and the supporting plate, and the liming plate mounting clearance is configured for accommodating the limiting plate. When the machine is required to be mounted, the machine fixing plate is fixedly connected with the machine, the hanging plate body is fixedly connected with the wall surface or other components to be mounted, then the hanger with the machine is brought close to the hanging plate, and then the limiting plate is inserted into the limiting plate mounting clearance, and an upper surface of the supporting plate abuts against a lower surface of the mounting plate, to realize positioning and mounting of the hanger and the hanging plate, and thus realizing mounting of the machine.

As can be seen from the above description, in the wall-mounting assembly according to the present application, the hanging plate connected to the wall is provided, and the supporting plate is arranged at the hanging plate for supporting the mounting plate, which increases an area of a portion where the hanger is supported, so that a cantilever portion of the hanger is supported, and thereby reducing a situation that the hanger is deformed. Therefore, reliability of the wall-mounting assembly according to the present application is improved.

### BRIEF DESCRIPTION OF DRAWINGS

In order to more clearly illustrate the embodiments of the present application or the technical solutions in the conventional art, the drawings used in the embodiments or the conventional art description will be briefly introduced below. Apparently, the drawings in the following description are merely embodiments of the present application, and those skilled in the art can obtain other drawings based on the provided drawings without any creative work.
Figure 1 is a schematic view showing a position relationship of a wall-mounting assembly according to an embodiment of the present application after mounting;
Figure 2 is a schematic view showing a position relationship of a wall-mounting assembly according to the embodiment of the present application before mounting;
Figure 3 is a schematic view showing the structure of a hanger according to the embodiment of the present application;
Figure 4 is a schematic view showing the structure of a hanging plate according to the embodiment of the present application;
Figure 5 is a side view of the hanger according to the embodiment of the present application;
Figure 6 is a side view of the hanging plate according to the embodiment of the present application;
Figure 7 is a schematic view showing a mounting position of the hanger according to the embodiment of the present application;
Figure 8 is a schematic view showing a mounting position of a levelness detection device according to the embodiment of the present application;
Figure 9 is a schematic view showing the structure of the hanger and the hanging plate according to the embodiment of the present application when the hanger moves toward the hanging plate;
Figure 10 is a schematic view showing the structure of the hanger and the hanging plate according to the embodiment of the present application when the hanger is located right above the hanging plate;
Figure 11 is a schematic view showing the structure of the hanger and the hanging plate according to the embodiment of the present application when the hanger moves downward;
Figure 12 is a schematic view showing the structure of a lock screw according to the embodiment of the present application;
Figure 13 is a schematic structural view showing a state before the lock screw is mounted to the wall-mounting assembly according to the embodiment of the present application;
Figure 14 is a schematic structural view showing a state that the lock screw is being mounted to the wall-mounting assembly according to the embodiment of the present application; and
Figure 15 is a schematic view showing the structure of the wall-mounting assembly according to the embodiment of the present application.

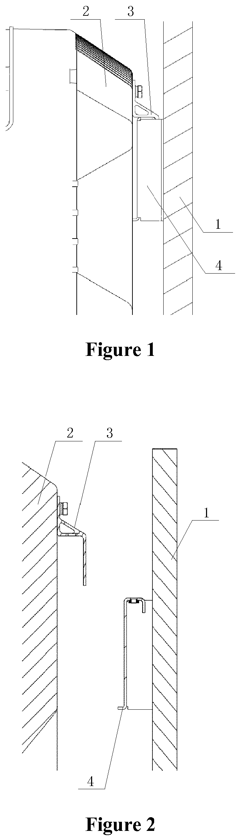

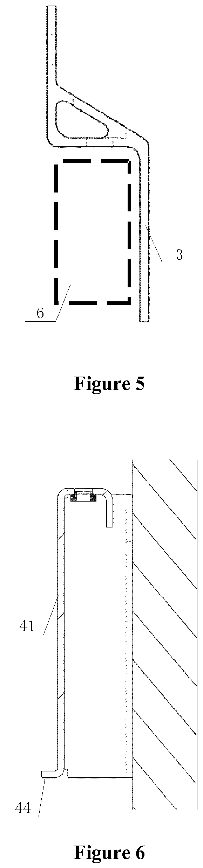

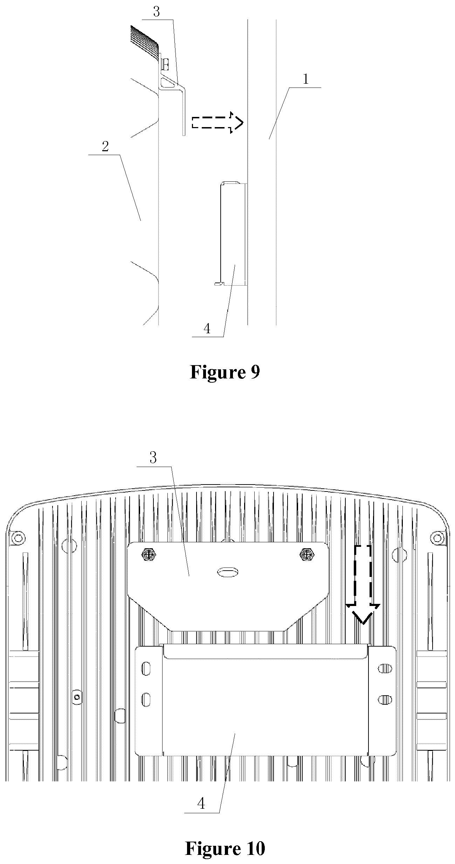

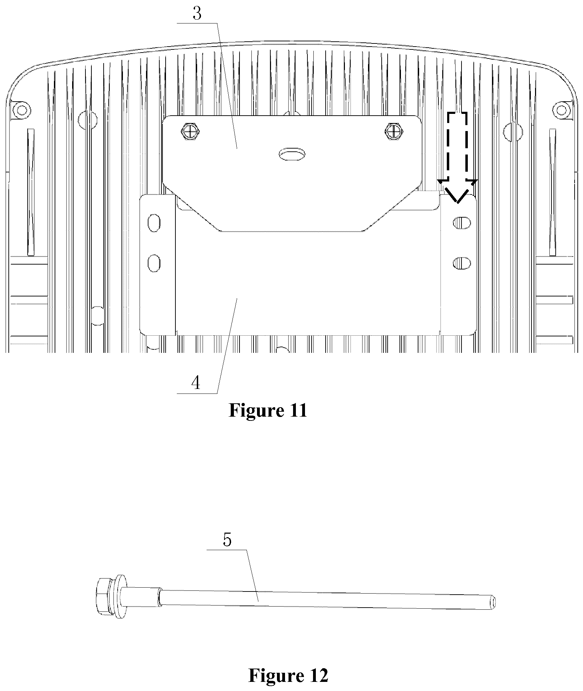

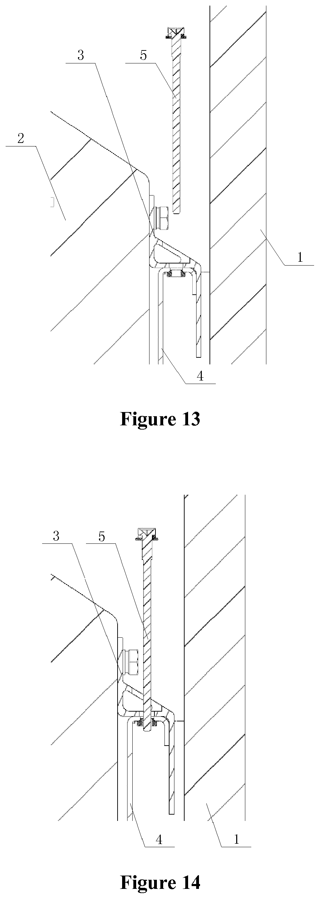

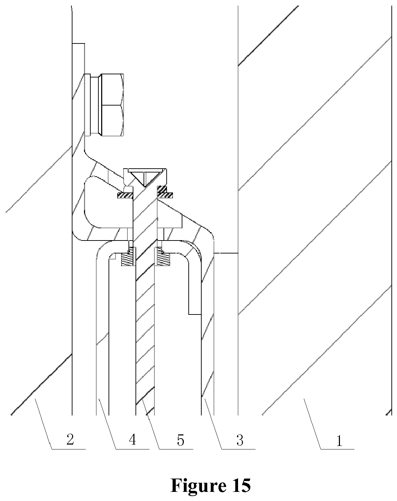

Reference Numerals in Figures 1 to 15:

| | | | |
|---|---|---|---|
| 1 | wall, | 2 | machine, |
| 3 | hanger, | 31 | reinforcing plate, |
| 32 | machine fixing plate, | 33 | limiting plate, |
| 34 | mounting plate, | 35 | guiding surface, |
| 36 | first mounting hole; | | |
| 4 | hanging plate, | 41 | hanging plate body, |
| 42 | supporting plate, | 43 | wall mounting portion, |
| 44 | limiting projection, | 45 | supporting projection portion, |
| 46 | second mounting hole; | | |
| 5 | lock screw, space, | 6 | hanging plate accommodating |
| 7 | levelness detection device. | | |

### DETAILED DESCRIPTION

An aspect of the present application is to provide a wall-mounting assembly, to improve reliability of the wall-mounting assembly.

For those skilled in the art to better understand technical solutions of the present application, the present application will be further described in detail in conjunction with drawings and embodiments hereinafter.

Reference is made to Figures 1 to 15, in a specific embodiment, a wall-mounting assembly according to the embodiment of the present application includes a hanger 3 and a hanging plate 4. The hanger 3 includes a mounting plate 34, a machine fixing plate 32, and a limiting plate 33, the machine fixing plate 32 and the limiting plate 33 are fixed at two opposite ends of the mounting plate 34 respectively, and are located at an upper portion and a lower portion of the mounting plate 34, respectively; the hanging plate 4 includes a hanging plate body 41 and a supporting plate 42 arranged at the hanging plate body 41, and the supporting plate 42 is configured for supporting the mounting plate 34; a limiting plate mounting clearance is provided by cooperation between the hanging plate body 41 and the supporting plate 42, and the liming plate mounting clearance is configured for accommodating the limiting plate 33. A hanging plate accommodating space 6, defined by the mounting plate 34 and the limiting plate 33, is formed below the mounting plate 34, and the hanging plate accommodating space 6 is configured for accommodating a thickness of the hanging plate 4 and preventing the machine 2 from moving downward as well. The limiting plate 33 is limited by the hanging plate 4 after being inserted into the limiting plate mounting clearance, and two ends of the hanging plate body 41 are fixed to a wall 1, to prevent the limiting plate 33 from tending to move in a direction toward an outside of the wall 1.

When the machine 2 is required to be mounted, the machine fixing plate 32 is fixedly connected with the machine 2, the hanging plate body 41 is fixedly connected with a wall surface or other components to be mounted, then the hanger 3 with the machine is brought close to the hanging plate 4, and then the limiting plate 33 is inserted into the limiting plate mounting clearance, that is, the limiting plate 33 is used to insert in a gap formed between the hanging plate 4 and the wall surface, and provide a plane that can prevent the machine 2 from moving in the direction toward the outside of the wall. An upper surface of the supporting plate 42 abuts against a lower surface of the mounting plate 34, to realize positioning and mounting of the hanger 3 and the hanging plate 4, and thereby realizing the mounting of the machine 2.

As can be seen from the above description, in the wall-mounting assembly according to the specific embodiment of the present application, the hanging plate 4 connected to the wall 1 is provided, and the supporting plate 42 is arranged at the hanging plate 4 for supporting the mounting plate 34, which increases an area of a portion where the hanger 3 is supported, so that a cantilever portion of the hanger 3 is supported, and thereby reducing a situation that the hanger 3 is deformed. Therefore, the reliability of the wall-mounting assembly according to the present application is improved.

On the other hand, the hanger 3 and the hanging plate 4 can provide sufficient hanging strength without welding, which satisfies reliability requirements and reduces operation difficulty.

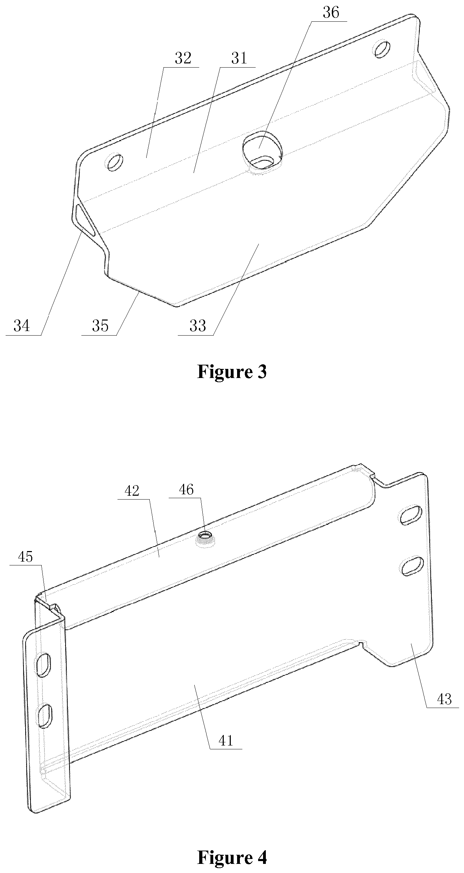

As shown in Figure 4, the hanging plate body 41 is a convex-shaped plate having a convex portion in the middle, the convex portion is formed by bending sheet metal, the supporting plate 42 is located above the convex portion of the hanging plate body 41, and each of two opposite ends of the supporting plate 42 is provided with a supporting projection portion 45 abutting against a top end of a side wall of a corresponding end of the convex portion. Each of two opposite ends of the hanging plate body 41 is provided with a wall mounting portion 43 of the hanging plate body 41, and the wall mounting portion 43 is preferably connected to the wall 1 by a threaded fastener. When the supporting projection portion 45 is subjected to a downward force, the supporting projection portion 45 can abut against a vertical plane, that is, abut against the hanging plate body 41, to provide strong support.

After the mounting the machine 2 is completed, due to a cooperating relation, a "head down" phenomenon may occur. Preferably, one side of the hanging plate body 41 facing the machine 2 is provided with a limiting projection 44 which is able to abut against a back portion of the machine 2, and the back portion of the machine 2 is a side opposite to a front side of the machine. In order to facilitate the processing of the hanging plate 4, preferably, the limiting projection 44 is formed by bending a bottom end of the hanging plate body 41; preferably, the limiting projection 44 and the supporting plate 42 are located at the bottom end and a top end of the hanging plate body 41, respectively. A bending size of the limiting projection 44 is controlled, so as to ensure that the front side of the product is perpendicular to a sight line of a person, and that the product is esthetical and reliable.

Further, the wall-mounting assembly further includes a levelness detection device 7 for detecting whether the hanging plate 4 is mounted horizontally, specifically, the levelness detection device 7 is preferably fixedly connected to the hanging plate 4, and the levelness detection device 7 may be a conventional levelness detection device. The balancing tool is pre-mounted to facilitate horizontal adjustment when fixing the hanging plate 4.

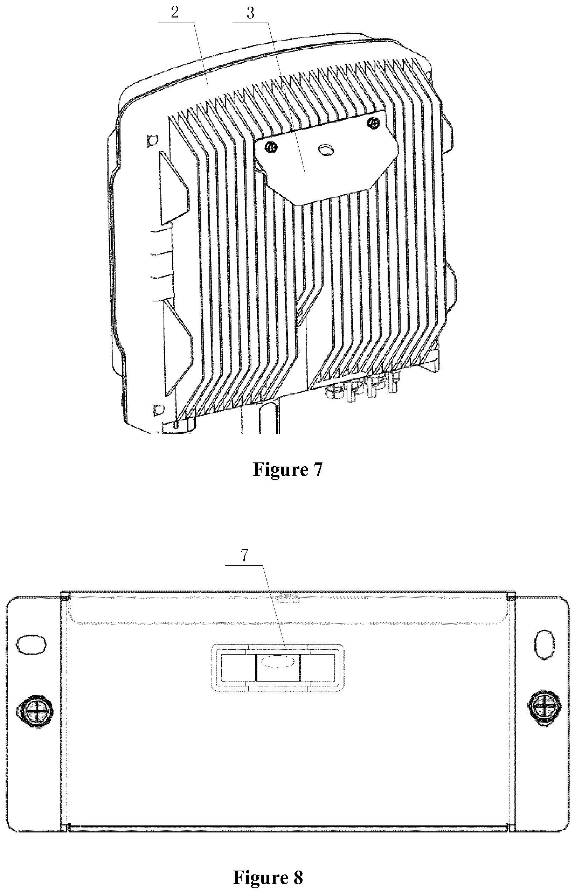

Preferably, as shown in Figure 8, the levelness detection device 7 is provided with a sealed chamber horizontally placed on the hanging plate body 41, there are a liquid and a detecting bubble floating on top of the liquid inside the sealed chamber, and each of two opposite ends of a middle portion of the sealed chamber is provided with a detecting control line. When the hanging plate 4 is fixed on the wall, by determining that the bubble of the levelness detection device 7 is in the middle of the two detection control lines, the horizontal mounting of the hanging plate 4 can be ensured. Specifically, the levelness detection device 7 may be mounted on the hanging plate 4 by a clamping buckle.

In order to improve the safety during using the machine 2, preferably, the wall-mounting assembly further includes a lock screw 5 for locking the mounting plate 34 and the supporting plate 42. Specifically, the hanger 3 is provided with a first mounting hole 36 configured for allowing the lock screw 5 to pass through, and the hanging plate 4 is provided with a second mounting hole 46 exactly facing the first mounting hole 36. The lock screw 5 is aligned with the first mounting hole 36 and the second mounting hole 46, and the lock screw 5 is inserted into the first mounting hole 36 and the second mounting hole 46 and is released, then the lock screw 5 automatically slides to a threaded section by gravity, and then the lock screw 5 is tightly screwed by a screwdriver, so as to complete the fixing operation. In order to facilitate the overall locking, preferably, a bottom end of the supporting plate 42 is provided with a nut threadedly connected to the lock screw 5, and after the hanger 3 is mounted to the hanging plate 4, the supporting plate 42 is in contact with a bottom plane of the hanger 3, to limit downward movement, and the lock screw 5 is threadedly connected to the nut to realize fixing.

In order to reduce the difficulty in mounting the hanger 3, preferably, each of two opposite sides of a bottom end of the limiting plate 33 is provided with a guiding surface 35, and a large room is provided for automatically guiding the machine 2 in the mounting process. The guiding surface 35 is used for accommodating a small range of position deviation when the wall-mounting assembly is mounted. Even if a certaindegree of deviation occurs in a left or right side of the machine 2, the limiting plate 33 of the wall-mounting assembly can also be guided into the limiting plate mountingclearance.

Further, the hanger 3 includes a reinforcing plate 31 arranged above the mounting plate 34, and two ends of the reinforcing plate 31 arc connected to the machine fixing plate 32 and the limiting plate 33. respectively. The reinforcing plate 31 is provided to supply sufficient strength to withstand the gravity of the machine 2 and prevent a tendency of downward movement due to the gravity, so as to prevent deformation, and further prolonging a service life of the wall-mounting assembly.

Preferably, the hanger 3 is integrally formed by extrusion. Specifically, the hanger 3 has an uniform cross section, and is formed by extrusion of an aluminum alloy, and the hanger 3 has the advantages of stable sizes, light weight, high strength, and low cost. Since the hanger 3 is formed by extrusion of the aluminum alloy, and a size of an end surface is constant, a length of the hanger 3 may be freely adjusted, which can be fitted with machines 2 of different sizes very well. The length of the hanger 3 can be freely adjusted according to the size of the machine 2, and a mould can be shared without modification.

On the basis of the above technical solutions, preferably, the hanging plate 4 is formed by bending sheet metal. Specifically, by bending for a minimum number of times, the hanging plate 4 can provide sufficient supporting strength without welding.

The wall-mounting assembly according to the present application has the advantages of simple process, less processing steps, small overall size and low cost, which is convenient for widespread use.

The above embodiments in this specification are described in a progressive manner. Each of the embodiments is mainly focused on describing its differences from other embodiments, and references may be made among these embodiments with respect to the same or similar portions among these embodiments.

Based on the above description of the disclosed embodiments, those skilled in the art are capable of carrying out or using the present application. It is obvious for those skilled in the art to make many modifications to these embodiments. The general principle defined herein may be applied to other embodiments without departing from the scope of the present application. Therefore, the present application is not limited to the embodiments illustrated herein, but should be defined by the broadest scope consistent with the principle and novel features disclosed herein.

## Claims

1. A wall-mounting assembly, comprising a hanger (3) and a hanging plate (4), wherein
the hanger (3) comprises a mounting plate (34), a machine fixing plate (32), and a limiting plate (33); the machine fixing plate (32) and the limiting plate (33) are fixed at two opposite ends of the mounting plate (34) respectively, and are located at an upper portion and a lower portion of the mounting plate (34), respectively; and
the hanging plate (4) comprises a hanging plate body (41) and a supporting plate (42) arranged at the hanging plate body (41), the supporting plate (42) is configured for supporting the mounting plate (34), a limiting plate mounting clearance is provided by cooperation between the hanging plate body (41) and the supporting plate (42), and the liming plate mounting clearance is configured for accommodating the limiting plate (33); **characterized in that**
hanging plate body (41) is a convex-shaped plate having a convex portion in the middle, the supporting plate (42) is located above the convex portion of the hanging plate body (41), and each of two opposite ends of the supporting plate (42) is provided with a supporting projection portion (45) abutting against a top end of a side wall of a corresponding end of the convex portion.

2. The wall-mounting assembly according to claim 1, wherein one side of the hanging plate body (41) facing a machine (2) is provided with a limiting projection (44) configured to abut against a back portion of the machine (2).

3. The wall-mounting assembly according to claim 1, further comprising a levelness detection device (7) for detecting whether the hanging plate (4) is mounted horizontally.

4. The wall-mounting assembly according to claim 3, wherein the levelness detection device (7) is provided with a sealed chamber horizontally placed on the hanging plate body (41), there are a liquid and a detecting bubble floating on top of the liquid inside the sealed chamber, and each of two opposite ends of a middle portion of the sealed chamber is provided with a detecting control line.

5. The wall-mounting assembly according to claim 1, further comprising a lock screw (5) configured for locking the mounting plate (34) and the supporting plate (42).

6. The wall-mounting assembly according to claim 1, wherein each of two opposite sides of a bottom end of the limiting plate (33) is provided with a guiding surface (35).

7. The wall-mounting assembly according to claim 1, wherein the hanger (3) further comprises a reinforcing plate (31) arranged above the mounting plate (34), and two ends of the reinforcing plate (31) are connected to the machine fixing plate (32) and the limiting plate (33), respectively.

8. The wall-mounting assembly according to claim 7, wherein the hanger (3) is integrally formed by extrusion.

9. The wall-mounting assembly according to any one of claims 1 to 8, wherein the hanging plate (4) is formed by bending sheet metal.

## Patentansprüche

1. Wandmontageanordnung, die einen Aufhänger (3) und eine Aufhängeplatte (4) umfasst, wobei
der Aufhänger (3) eine Montageplatte (34), eine Maschinenbefestigungsplatte (32) und eine Begrenzungsplatte (33) umfasst; die Maschinenbefestigungsplatte (32) und die Begrenzungsplatte (33) jeweils an zwei gegenüberliegenden Enden der Montageplatte (34) befestigt sind und jeweils an einem oberen Abschnitt und einem unteren Abschnitt der Montageplatte (34) angeordnet sind; und
die Aufhängeplatte (4) einen Aufhängeplattenkörper (41) und eine an dem Aufhängeplattenkörper (41) angeordnete Stützplatte (42) umfasst, die Stützplatte (42) zum Stützen der Montageplatte (34) ausgebildet ist, ein Begrenzungsplatten-Montagespiel durch Zusammenwirken zwischen dem Aufhängeplattenkörper (41) und der Stützplatte (42) vorgesehen ist, und das Begrenzungsplatten-Montagespiel zur Aufnahme der Begrenzungsplatte (33) ausgelegt ist;
**dadurch gekennzeichnet, dass**
der Aufhängeplattenkörper (41) eine konvex geformte Platte mit einem konvexen Abschnitt in der Mitte ist, die Stützplatte (42) über dem konvexen Abschnitt des Aufhängeplattenkörpers (41) angeordnet ist und jedes von zwei gegenüberliegenden Enden der Stützplatte (42) mit einem stützenden Vorsprungabschnitt (45) versehen ist, der gegen ein oberes Ende einer Seitenwand eines entsprechenden Endes des konvexen Abschnitts anliegt.

2. Wandmontageanordnung nach Anspruch 1, wobei eine Seite des Aufhängeplattenkörpers (41), die einer Maschine (2) zugewandt ist, mit einem Begrenzungsvorsprung (44) versehen ist, der so ausgelegt ist, dass er an einem hinteren Abschnitt der Maschine (2) anliegt.

3. Wandmontageanordnung nach Anspruch 1, des Weiteren umfassend eine Horizontalitätsermittlungsvorrichtung (7) zum Ermitteln, ob die Aufhängeplatte (4) horizontal montiert ist.

4. Wandmontageanordnung nach Anspruch 3, wobei die Horizontalitätsermittlungsvorrichtung (7) mit einer abgedichteten Kammer versehen ist, die horizontal auf dem Aufhängeplattenkörper (41) angeordnet ist, wobei sich eine Flüssigkeit und eine Ermittlungsblase, die auf der Oberfläche der Flüssigkeit schwimmt, innerhalb der abgedichteten Kammer befinden, und wobei jedes der beiden gegenüberliegenden Enden eines mittleren Abschnitts der abgedichteten Kammer mit einer Ermittlungskontrolllinie versehen ist.

5. Wandmontageanordnung nach Anspruch 1, die ferner eine Sicherungsschraube (5) umfasst, die zum Verriegeln der Montageplatte (34) und der Stützplatte (42) ausgelegt ist.

6. Wandmontageanordnung nach Anspruch 1, wobei jede der beiden gegenüberliegenden Seiten eines unteren Endes der Begrenzungsplatte (33) mit einer Führungsfläche (35) versehen ist.

7. Wandmontageanordnung nach Anspruch 1, wobei der Aufhänger (3) ferner eine Verstärkungsplatte (31) umfasst, die oberhalb der Montageplatte (34) angeordnet ist, und zwei Enden der Verstärkungsplatte (31) mit der Maschinenbefestigungsplatte (32) bzw. der Begrenzungsplatte (33) verbunden sind.

8. Wandmontageanordnung nach Anspruch 7, wobei der Aufhänger (3) einstückig durch Strangpressen hergestellt ist.

9. Wandmontageanordnungen nach einem der Ansprüche 1 bis 8, wobei die Aufhängeplatte (4) durch Biegen von Blech geformt ist.

## Revendications

1. Un ensemble de montage mural, comprenant un organe de suspension (3) et une plaque de suspension (4), dans lequel
l'organe de suspension (3) comprend une plaque de montage (34), une plaque de fixation de machine (32) et une plaque de limitation (33) ;
la plaque de fixation de machine (32) et la plaque de limitation (33) sont fixées à deux extrémités opposées de la plaque de montage (34) respectivement, et sont situées à une partie supérieure et une partie inférieure de la plaque de montage (34), respectivement ; et
la plaque de suspension (4) comprend un corps de plaque de suspension (41) et une plaque de support (42) agencée au niveau du corps de plaque de suspension (41), la plaque de support (42) est configurée pour supporter la plaque de montage (34), un espace de montage de plaque de limitation est réalisé par coopération entre le corps de plaque de suspension (41) et la plaque de support (42), et l'espace de montage de plaque de limitation est configuré pour loger la plaque de limitation (33) ; **caractérisé en ce que**
le corps de plaque de suspension (41) est une plaque de forme convexe ayant une partie convexe au milieu, la plaque de support (42) est située au-dessus de la partie convexe du corps de plaque de suspension (41), et chaque extrémité parmi deux extrémités opposées du support la plaque (42) est pourvue d'une partie saillante (45) de support venant en butée contre une extrémité supérieure d'une paroi latérale d'une extrémité correspondante de la partie convexe.

2. L'ensemble de montage mural selon la revendication 1, dans lequel un côté du corps de plaque de suspension (41) tourné vers une machine (2) est pourvu d'une saillie de limitation (44) configurée pour venir en butée contre une partie arrière de la machine (2).

3. L'ensemble de montage mural selon la revendication 1, comprenant en outre un dispositif de détection de niveau (7) pour détecter si la plaque de suspension (4) est montée horizontalement.

4. L'ensemble de montage mural selon la revendication 3, dans lequel le dispositif de détection de niveau (7) est pourvu d'une chambre fermée de façon étanche placée horizontalement sur le corps de plaque de suspension (41), un liquide et une bulle de détection flottent au-dessus du liquide à l'intérieur de la chambre fermée de façon étanche, et chaque extrémité parmi deux extrémités opposées d'une partie médiane de la chambre fermée de façon étanche est pourvue d'une ligne de commande de détection.

5. L'ensemble de montage mural selon la revendication 1, comprenant en outre une vis de blocage (5) configurée pour verrouiller la plaque de montage (34) et la plaque de support (42).

6. L'ensemble de fixation murale selon la revendication 1, dans lequel chaque côté parmi deux côtés opposés d'une extrémité inférieure de la plaque de limitation (33) est pourvu d'une surface de guidage (35).

7. L'ensemble de fixation murale selon la revendication 1, dans lequel l'organe de suspension (3) comprend en outre une plaque de renfort (31) disposée au-dessus de la plaque de fixation (34), et deux extrémités de la plaque de renfort (31) sont reliées à la plaque de fixation de machine (32) et à la plaque de limitation (33), respectivement.

8. L'ensemble de fixation murale selon la revendication 7, dans lequel l'organe de suspension (3) est formé d'un seul tenant par extrusion.

9. L'ensemble de fixation murale selon l'une quelconque des revendications 1 à 8, dans laquelle la plaque de suspension (4) est formée par pliage de tôle.
